# EUROPÄISCHE PATENTSCHRIFT

(11) **EP 0 427 128 B1**
(45) Veröffentlichungstag und Bekanntmachung des Hinweises auf die Patenterteilung: **16.03.1994**
(21) Anmeldenummer: 90121011.2
(22) Anmeldetag: 02.11.1990
(51) Int. Cl.: H01B 13/14, H01B 13/24

(54) **Verfahren und Vorrichtung zur Stabilisierung extrudierter strangförmiger Produkte, insbesondere Kabel für die Silanvernetzung**
Process and device for stabilisation of extruded strand products, especially cables for silane-crosslinking
Procédé et dispositif pour stabiliser des produits extrudés sous forme de filaments, en particulier des câbles, pour la réticulation au silane

(30) Priorität: 04.11.1989 DE 8913051 U; 04.11.1989 DE 3936795; 06.11.1989 EP 89710076
(43) Veröffentlichungstag der Anmeldung: 15.05.1991
(73) Patentinhaber: PAUL TROESTER MASCHINENFABRIK, D-30519 Hannover (DE)
(72) Erfinder: Brüll, Albert, W-3014 Laatzen (DE); Greve, Helmut Dipl.-Ing., W-3000 Hannover 72 (DE)
(74) Vertreter: Junius, Walther, Dr.

(56) Entgegenhaltungen:
- DE-A- 2 542 532
- FR-A- 2 344 939
- FR-A- 2 445 000
- FR-A- 2 493 026

## Beschreibung

Die Erfindung betrifft ein Verfahren und eine Vorrichtung für die Stabilisierung extrudierter strangförmiger Produkte, insbesondere Kabel, für die Silan-Vernetzung, bestehend aus einem von einem Extruder gespeisten Strangspritzkopf, einer Vernetzungsanlage, die aus einem langen einteiligen oder aus mehreren Rohrstücken zusammengesetzten gasgefülltem Behandlungsrohr besteht, und einer vor oder in dem Behandlungsrohr angeordneten Vorrichtung zum Behandeln des Stranges mit Wasser.

Diese Möglichkeit zur Stabilisierung extrudierter strangförmiger Produkte, insbesondere Kabel, für die Silan-Vernetzung ist aus der FR-A-2 493 026 bekannt geworden. Bei diesem Arbeitsverfahren kann eine fertige Polyäthylen-Silan-Katalysator-Mischung mit einem Extruder bei normaler Polyäthylen-Schmelztemperatur und hoher Schneckendrehzahl und entsprechend großer Ausstoßleistung bearbeitet werden, weil eine Vernetzung bereits im Extruder nicht zu befürchten ist. Denn die Vernetzung dieses Materials wird nicht durch Wärme allein initiiert und durchgeführt. Das mit der extrudierten Isolierumhüllung versehene Kabel wird nach dem Extrusionsvorgang direkt in ein Kühlbad geleitet und abgekühlt und dabei in seiner Form stabilisiert. Der Vernetzungsvorgang erfolgt dann anschließend in einem anderen Arbeitsvorgang.

Für die Durchführung dieses Silan-Verfahrens sind spezielle Anlagen entwickelt worden. Kabelfabriken, die diese Anlagen nicht anschaffen wollten, weil sie nur gelegentlich nach dem Silan-Verfahren arbeiten, haben diejenigen Vernetzungsanlagen für die Durchführung dieses Verfahrens benutzt, die für die Verarbeitung von mit Peroxiden gemischtem Polyäthylen entwickelt waren, indem sie einfach das lange Vernetzungsrohr teilweise oder ganz mit Wasser füllten. Dabei zeigte sich, daß das Kabel mit geringem mittleren Querschnittsgewicht im Wasser durch den Auftrieb so stark beeinflußt wird, daß die Zugkraft im Kabel instabil wird und nicht einfühlig genug geregelt werden kann. Beim Durchziehen des Kabels durch das in Kettenlinie gebogene Rohr kam es dabei durch die wechselnde Zugkraft zum Schleifen des Kabels an der oberen und/oder unteren Rohrwandung. Durch nur teilweise Füllung des Rohres mit Wasser kann man diesen Effekt des Aufschwimmens abmildern. Dabei ergibt sich aber der Nachteil, daß sich der Effekt der Deformation des frisch aufgebrachten, noch verformbaren Isolationsmantels unter dem Einfluß der Schwerkraft in nicht unerheblicher Weise bemerkbar macht, und damit die Fertigungstoleranzen des Isolationsmantels schlechter werden.

Die Erfindung vermeidet die Nachteile des Standes der Technik. Es ist die Aufgabe der vorliegenden Erfindung, eine einfache Möglichkeit zu schaffen, um die für die Silan-Vernetzung vorgesehenen Produkte in einem Durchhangrohr zu kühlen und in ihrer Form zu stabilisieren und so die Anlage bei geringem Umrüstungsaufwand für beide Verfahren optimal einsetzen zu können.

Die erfindungsgemäße Vorrichtung zeichnet sich dadurch aus, daß das Behandlungsrohr ein Durchhangrohr ist und daß die Vorrichtung zum Behandeln mit Wasser auf einem quer zur Rohrachse des Behandlungsrohres verschiebbaren Wagen angeordnet ist.

Diese Anlage kann sowohl für das Silan-Verfahren als auch für die peroxidische Vernetzung unter Gas- bzw. Dampfdruck für ein Kabel oder strangförmiges Produkt genutzt werden. Denn die Wasserbehandlungsvorrichtung ist transportabel, sie ist auf einem quer zur Rohrachse der Vernetzungsanlage verfahrbaren Wagen angeordnet. Dieser Wagen kann je nach der gewünschten Behandlung des Kabels zwischen den Strangpreßkopf und den Rohranfang der Vernetzungsanlage ein- und wieder herausgefahren werden.
Für die Durchführung der Stabilisierung strangförmiger extrudierter Produkte, insbesondere Kabel, in einem Durchhangrohr kann es für die Silan-Vernetzung zweckmäßig sein, wenn man das Produkt, das zu Anfang nach der Extrusion einer schockartigen Abkühlung durch Wasser unterworfen wurde, dann in das ungefüllte Durchhangrohr einlaufen läßt, in welchem man es einer weiteren Wasserbehandlung aussetzt.

Zweckmäßigerweise kann man die Abkühlung durch gekühlte Gase im Durchhangrohr unterstützen.

Die Wasserbehandlung und die mit ihr erfolgende schockartige Abkühlung kann vor dem Einlauf in das Durchhangrohr erfolgen, sie kann aber auch allein im Durchhangrohr erfolgen und sie kann sowohl vor dem Durchhangrohr als auch dann weiter im Durchhangrohr erfolgen, hier eventuell in Unterstützung durch gekühlte Luft oder gekühlte Gase.

Das Wesen der Erfindung ist nachstehend anhand von in der Zeichnung dargestellten Ausführungsbeispielen näher erläutert. Es zeigen:
- Fig. 1: eine Ansicht der Vorrichtung von der Seite, teilweise im Schnitt,
- Fig. 2: eine Ansicht der Vorrichtung der Fig. 1 von oben,
- Fig. 3: eine Ansicht einer anderen Wasserbehandlungsvorrichtung,
- Fig. 4: eine Ansicht einer weiteren Wasserbehandlungsvorrichtung,
- Fig. 5: einen Schnitt durch die Düsenanordnung dieser Wasserbehandlungsvorrichtung,
- Fig. 6: eine Anordnung einer Wasserbehandlungsvorrichtung im Durchhangrohr,
- Fig. 7: einen Querschnitt durch diese Vorrichtung.

Ein in den Spritzkopf 1 eines nicht dargestellten Extruders einlaufender heiter oder Kabel 2 wird in diesem Spritzkopf 1 mit einer das Kabel umhüllenden Isolierung bzw. Ummantelung 3 versehen. Dieses mit der Umhüllung 3 versehene Kabel 2 wird zur Vernetzung der Umhüllung 3 in das Durchhangrohr 4 eingeleitet, welches als erstes Rohrstück ein Teleskoprohr 5 aufweist, dessen Teleskoprohrkopf 6 an den Ausgangsstutzen 7 ankoppelbar ist, damit bei der Verarbeitung von Polyäthylen-Peroxyd-Gemischen ein gasdichter Übergang vom Spritzkopf 1 auf das Durchhangrohr 4 gewährleistet ist. Dieses Teleskoprohr 5 ist in das Durchhangrohr 4 einschiebbar.

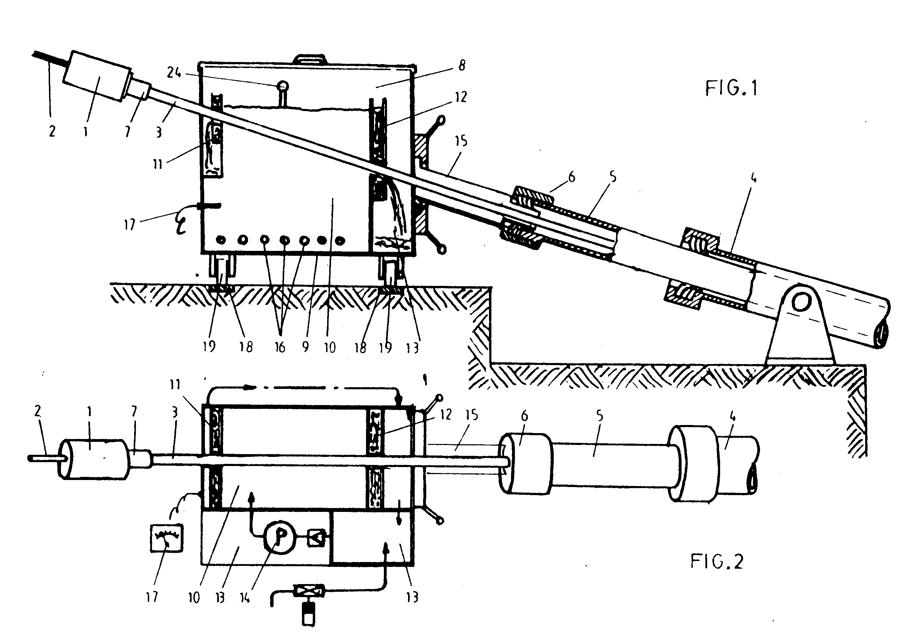

Ist diese Einschiebung des Teleskoprohres 5 in das Durchhangrohr 4 vorgenommen, ist zwischen dem Spritzkopf 1 und dem Durchhangrohr 4 ausreichend Platz, um eine Wasserbehandlungsvorrichtung 8 zwischen dem Spritzkopf 1 und dem Durchhangrohr 4 anzuordnen. Diese Wasserbehandlungsvorrichtung besteht im Ausführungsbeispiel der Fig. 1 und 2 aus einem auf dem Wagen 9 montierten Tauchbad 10, welches mit einer Stangeinlaßvorrichtung 11 und einer Strangauslaßvorrichtung 12 versehen ist. Durch diese Strangeinlaßvorrichtung 11 und die Strangauslaßvorrichtung 12 entweicht Wasser aus dem Tauchbad 10, das in der Auffangwanne 13 aufgefangen wird und mittels der Pumpe 14 in das Tauchbad 10 zurückgepumpt wird. Das strangförmige Produkt 3 verläßt die Wasserbehandlungsvorrichtung 8 durch einen Auslaßstutzen 15 der an den Teleskoprohrkopf 6 wasserdicht angekoppelt ist. Das Tauchbad 10 wird durch Tauchheizkörper 16 geregelt durch die Regelvorrichtung 17 aufgeheizt. Mittels der Räder 19 ist der Wagen 9 auf Schienen 18 fahrbar.

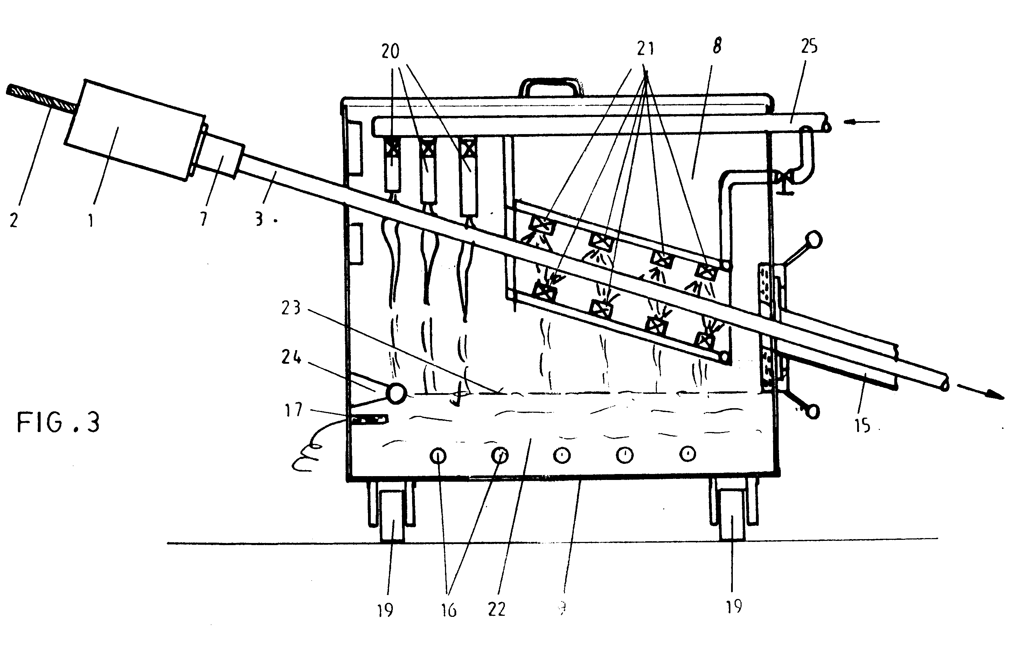

Im Ausführungsbeispiel der Fig. 3 ist die Wärmebehandlungsvorrichtung 8 mit Schwallwasserdüsen 20 und Sprühdüsen 21 ausgestattet. Der untere Teil des Wagens 9 ist als Auffangbecken 22 gestaltet. Über das Niveau 23 herübersteigendes Wasser wird durch den Niveauwächter 24 festgestellt und in ein nicht dargestelltes Auslaßrohr abgeführt, welches das Wasser einer nicht dargestellten externen Pumpe zuführt und über die Wasserleitung 25 wieder den Schwallwasserdüsen 20 und Sprühdüsen 21 zuführt.

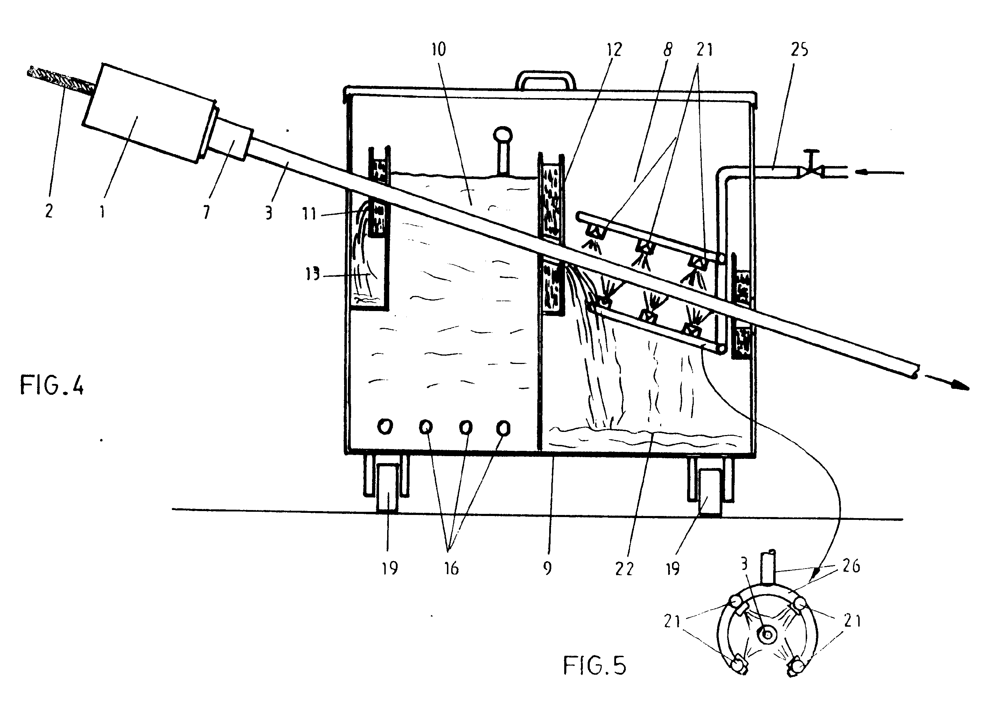

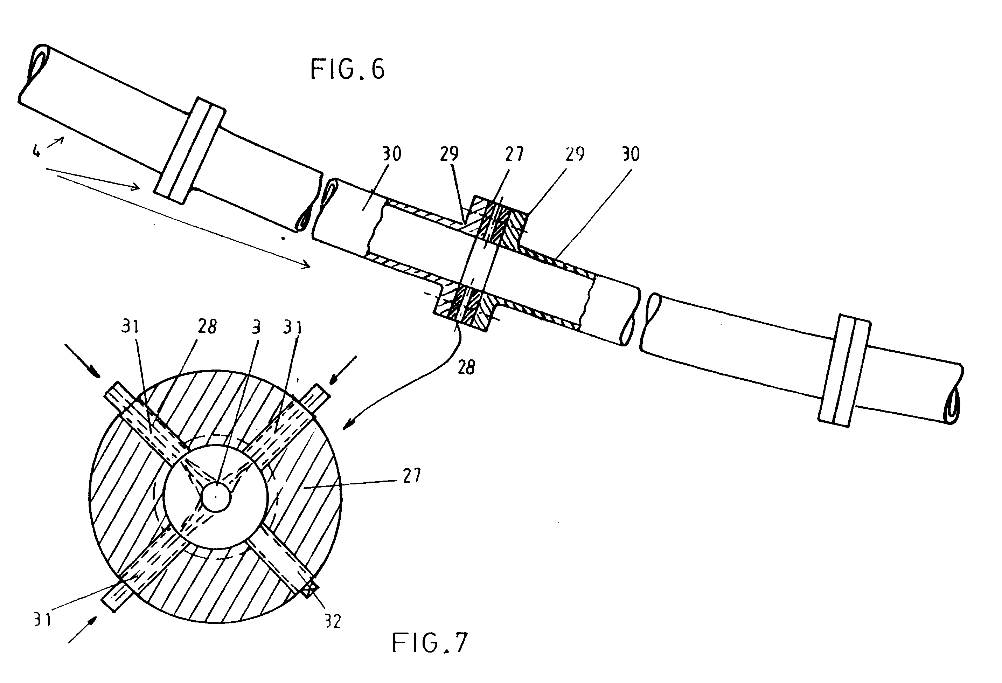

Im Ausführungsbeispiel der Fig. 4 ist in dem Wagen 9 der Wasserbehandlungsvorrichtung 8 sowohl ein Tauchbad 10 als auch eine mit Sprühdüsen 21 ausgerüstete Besprühvorrichtung angeordnet. Die Sprühdüsen 21 sind um 90° versetzt angeordnet und von der Wasserleitung 26 getragen (Fig. 5).

Wie Fig. 6 zeigt, sind im Durchhangrohr 4 Wasserbehandlungsvorrichtungen 27 zwischen je zwei Flanschen 29 von Rohrstücken 30 angeordnet. Diese Wasserbehandlungsvorrichtungen 27 weisen Düsen 31 auf, die ausgeschraubt werden können und durch Blindstücke 32 ersetzt werden können.

## Patentansprüche

1. Vorrichtung für die Stabilisierung extrudierter strangförmiger Produkte, insbesondere Kabel, für die Silan-Vernetzung,
bestehend aus einem von einem Extruder gespeisten Strangspritzkopf (1), einer Vernetzungsanlage (4), die aus einem langen einteiligen oder aus mehreren Rohrstücken (30) zusammengesetzten, gasgefülltem Behandlungsrohr (4) besteht, und einer vor oder in dem Behandlungsrohr (4) angeordneten Vorrichtung (8,27) zum Behandeln des Stranges (3) mit Wasser,
dadurch gekennzeichnet,
daß das Behandlungsrohr (4) ein Durchhangrohr ist und daß die Vorrichtung (8,27) zum Behandeln mit Wasser auf einem quer zur Rohrachse des Behandlungsrohres (4) verschiebbaren Wagen (9) angeordnet ist.

2. Vorrichtung nach Anspruch 1,
dadurch gekennzeichnet,
daß das Behandlungsrohr (4) an seinem dem Spritzkopf (1) zugewandten Ende mit einem teleskopierbaren Rohrstück (5) versehen ist,
und daß bei eingeschobenem Teleskoprohr (5) der Wagen (9) mit der Wasserbehandlungsvorrichtung (8) in den Zwischenraum zwischen Spritzkopf (1) und Teleskoprohr (5) einfahrbar ist.

3. Vorrichtung nach Anspruch 1,
dadurch gekennzeichnet,
daß der Spritzkopf (1) mit der Extrusionsanlage von der Vernetzungsanlage (4) weg verschiebbar ist,
und daß der Wagen (9) mit der Wasserbehandlungsanlage (8) in den Zwischenraum zwischen Spritzkopf (1) und Vernetzungsanlage (4) einfahrbar ist.

4. Vorrichtung nach einem der Ansprüche 1 bis 3,
dadurch gekennzeichnet,
daß die Wasserbehandlungsvorrichtung (8) fest und wasserdicht an das Anfangsrohr (5) des Behandlungsrohres (4) im Betriebszustand ankoppelbar ist.

5. Vorrichtung nach Anspruch 1,
dadurch gekennzeichnet,
daß die Wasserbehandlungsvorrichtung (8) aus einem Wasserbecken (10) mit einer Strangeinlaßvorrichtung (11) und einer Strangauslaßvorrichtung (12) besteht.

6. Vorrichtung nach Anspruch 1,
dadurch gekennzeichnet,
daß die Wasserbehandlungsvorrichtung (8) Schwallwasserdüsen (20) und/oder Sprühvorrichtungen (21) aufweist.

7. Vorrichtung nach Anspruch 1,
dadurch gekennzeichnet,
daß in der Wasserbehandlungsvorrichtung (8) mindestens ein Auffangbecken (13) und mindestens eine an das Auffangbecken (13) angeschlossene Pumpe (14) mit einem Temperier- und Wasserniveau-Regelkreis angeordnet sind.

8. Vorrichtung nach Anspruch 1,
dadurch gekennzeichnet,
daß die Wasserbehandlungsvorrichtung (8) mit einem Anschlußstutzen für eine von der Umwälzpumpe (14) herangeführte Wasserleitung versehen ist.

9. Vorrichtung nach Anspruch 1,
dadurch gekennzeichnet,
daß die Düsen (31), die im Durchhangrohr und dort vorzugsweise in den zwischen den einzelnen Rohrstücken (30) angeordneten Wasserbehandlungsvorrichtungen (8) angeordnet sind, gegen Blindstopfen (32) austauschbar bzw. durch spezielle Verschlüsse gegen Dampf- oder Heißgasdruck abdichtbar und gegen Ablagerungen aus dem Vernetzungsprozeß schützbar sind.

10. Verfahren zur Stabilisierung strangförmiger extrudierter Produkte, insbesondere Kabel, in einem Durchhangrohr, für die Silan-Vernetzung, bei dem man das Produkt nach der Extrusion einer schockartigen Abkühlung durch Wasser unterwirft,
dadurch gekennzeichnet,
daß man das Produkt dann in das ungefüllte Durchhangrohr (4) einlaufen läßt, in welchem man es einer weiteren Wasserbehandlung aussetzt.

11. Verfahren nach Anspruch 10,
dadurch gekennzeichnet,
daß man die Abkühlung durch gekühlte Gase im Durchhangrohr (4) unterstützt.

12. Verwendung einer Vorrichtung zur Herstellung vernetzter strangförmiger Produkte, insbesondere Kabel,
bestehend aus einem von einem Extruder gespeisten Strangspritzkopf (1) und einer aus einem langen einteiligen oder aus mehreren Rohrstücken (30) zusammengesetzten Durchhangrohr (4) bestehenden Vernetzungsanlage zur Stabilisierung des Produktes, für die Silan-Vernetzung, durch Anordnung mindestens einer auf einem quer zur Rohrachse des Behandlungsrohres (4) verfahrbaren Wagen (9) angeordneten Wasserbehandlungsvorrichtung vor oder im gasgefüllten Durchhangrohr.

## Claims

1. A device for stabilising extruded strand-like products, in particular cables, for silane cross-linking, comprising a strand extrusion head (1) fed by an extruder, a cross-linking apparatus (4) composed of a long, gas-filled treatment tube (4) consisting of one piece or a plurality of tubular components (30), and a device (8, 27), which is arranged in advance of or in the treatment tube (4), for treating the strand (3) with water, characterised in that the treatment tube (4) is a catenary tube and that the water treatment device (8, 27) is arranged on a carriage (9) which is displaceable transversely to the tube axis of the treatment tube (4).

2. A device as claimed in Claim 1, characterised in that at its end facing towards the extrusion head (1) the treatment tube (4) is provided with a telescopic tubular component (5), and that when the telescopic tube (5) is retracted the carriage (9) together with the water treatment device (8) can be moved into the space between the extrusion head (1) and the telescopic tube (5).

3. A device as claimed in Claim 1, characterised in that the extrusion head (1) with the extrusion apparatus can be moved away from the cross-linking apparatus (4), and that the carriage (9) with the water treatment apparatus (8) can be moved into the space between the extrusion head (1) and the cross-linking apparatus (4).

4. A device as claimed in one of Claims 1 to 3, characterised in that the water treatment device (8) can be coupled securely and in water-tight fashion to the starting tubular component (5) of the treatment tube (4) in the operating state.

5. A device as claimed in Claim 1, characterised in that the water treatment device (8) consists of a water tank (10) with a strand inlet device (11) and a strand outlet device (12).

6. A device as claimed in Claim 1, characterised in that the water treatment device (8) comprises water jet nozzles (20) and/or spray devices (21).

7. A device as claimed in Claim 1, characterised in that in the water treatment device (8) are arranged at least one collecting tank (13) and at least one pump (14) connected to the collectinq tank (13) with a temperature- and water level control system.

8. A device as claimed in Claim 1, characterised in that the water treatment device (8) is provided with a connection piece for a water pipeline leading from the circulating pump (14).

9. A device as claimed in Claim 1, characterised in that the nozzles (31), which are arranged in the catenary tube preferably in the water treatment devices (8) disposed between the individual tubular components (30), can be exchanged for blank plugs (32) or sealed from steam- or hot gas pressure by special seals and can be protected from deposits from the cross-linking process.

10. A process for stabilising strand-like extruded products, in particular cables, in a catenary tube, for silane cross-linking, wherein after the extrusion the product is subjected to shock-like cooling by water, characterised in that the product is then introduced into the unfilled catenary tube (4) in which it is subjected to further water treatment.

11. A process as claimed in Claim 10, characterised in that the cooling is supported by cooled gases in the catenary tube (4).

12. The use of a device for the production of cross-linked strand-like products, in particular cables, comprising a strand extrusion head (1) fed by an extruder and a cross-linking apparatus composed of a long catenary tube (4) consisting of one piece or a plurality of tubular components (30) for the stabilisation of the product, for the silane cross-linking, by the arrangement of at least one water treatment device, which is arranged on a carriage (9) displaceable transversely to the tube axis of the treatment tube (4), in advance of or in the gas-filled catenary tube.

## Revendications

1. Dispositif pour la stabilisation de produits extrudés sous forme de fils, en particulier de câbles, pour la réticulation au silane, constitué d'une tête d'extrusion (1), alimentée par une extrudeuse, d'une installation de réticulation (4) qui est constituée d'un tube du traitement (4) rempli de gaz, composé d'une longue pièce tubulaire (30) d'un seul tenant ou de plusieurs pièces tubulaires, ainsi que d'un dispositif (8, 27), placé devant ou dans le tube de traitement (4), pour le traitement du fil (3) avec de l'eau, caractérisé en ce que le tube du traitement (4) est un tube fléchi et en ce que le dispositif (8, 27) de traitement à l'eau est placé sur un chariot (4) coulissant transversalement à l'axe du tube de traitement (4).

2. Dispositif selon la revendication 1, caractérisé en ce que le tube de traitement (4) est pourvu, à son extrémité tournée vers la tête d'extrusion (1), d'une pièce tubulaire (5) télescopique, et en ce que lorsque le tube télescopique (5) est introduit, le chariot (9) avec le dispositif de traitement à l'eau (8) peut entrer dans l'espace intermédiaire compris entre la tête d'extrusion (1) et le tube télescopique (5).

3. Dispositif selon la revendication 1, caractérisé en ce que la tête d'extrusion (1) avec l'installation d'extrusion peut être éloignée par coulissement de l'installation de réticulation (4) et en ce que le chariot (9) avec l'installation de traitement à l'eau (8) peut être introduit dans l'espace intermédiaire compris entre la tête d'extrusion (1) et l'installation de réticulation (4).

4. Dispositif selon l'une des revendications 1 à 3, caractérisé en ce que le dispositif de traitement à l'eau (8) peut être accouplé de manière fixe et étanche à l'eau au tube initial (5) du tube de traitement (4) à l'état de fonctionnement.

5. Dispositif selon la revendication 1, caractérisé en ce que le dispositif de traitement à l'eau (8) est constitué d'un bassin d'eau (10) avec un dispositif d'entrée de fil (11) et d'un dispositif de sortie de fil (12).

6. Dispositif selon la revendication 1, caractérisé en ce que le dispositif de traitement à l'eau (8) comporte des buses de jets d'eau (20) et/ou des dispositifs de pulvérisation (21).

7. Dispositif selon la revendication 1, caractérisé en ce que dans le dispositif de traitement à l'eau (8) sont montés au moins un bassin de collecte (13) et au moins une pompe (14) raccordée au bassin de collecte (13) avec un circuit de mise en équilibre de température et de réglage du niveau d'eau.

8. Dispositif selon la revendication 1, caractérisé en ce que le dispositif de traitement à l'eau (8) est pourvu d'une tubulure de raccordement pour une conduite d'eau provenant de la pompe de circulation (14).

9. Dispositif selon la revendication 1, caractérisé en ce que les buses (31), qui sont montées dans le tube fléchi et à cet endroit de préférence dans les dispositifs de traitement à l'eau (8), placés entre les différentes pièces tubulaires (30), peuvent être échangées contre des bouchons borgnes (32) ou rendues étanches à la vapeur ou aux gaz chauds par des fermetures spéciales et protégées contre des dépôts résultant du processus de réticulation.

10. Procédé de stabilisation de produits extrudés sous forme de fils, en particulier de câbles, dans un tube fléchi, pour la réticulation au silane, dans lequel le produit, après extrusion, est soumis à un refroidissement brutal à l'eau, caractérisé en ce que le produit peut ensuite entrer dans le tube fléchi (4) non rempli, dans lequel il est soumis à un autre traitement à l'eau.

11. Procédé selon la revendication 10, caractérisé en ce que le refroidissement est soutenu par des gaz refroidis dans le tube fléchi (4).

12. Mise en oeuvre d'un dispositif pour la fabrication de produits sous forme de fils réticulés, en particulier de câbles, constitué d'une tête d'extrusion (1), alimentée par une extrudeuse et d'une installation de réticulation pour la stabilisation du produit, constituée d'un tube fléchi (4), composé d'une longue pièce tubulaire (30) d'un seul tenant ou de plusieurs pièces tubulaires, pour la réticulation au silane, par le fait qu'il est prévu au moins un dispositif de traitement à l'eau, devant ou dans le tube fléchi rempli de gaz, monté sur un chariot (9) déplaçable transversalement à l'axe du tube de traitement (4).
